# EUROPÄISCHE PATENTANMELDUNG

(11) **EP 4 764 268 A1**
(43) Veröffentlichungstag der Anmeldung: **24.06.2026**
(21) Anmeldenummer: 25223636.9
(22) Anmeldetag: 16.12.2025
(51) Int. Cl.: F16J 15/3268, A22C 11/08, F16J 15/06

(54) **NAHRUNGSMITTELMASCHINE MIT DICHTUNG**

(30) Priorität: 18.12.2024 DE 102024138519
(71) Anmelder: VEMAG Maschinenbau GmbH, 27283 Verden/Aller (DE)
(72) Erfinder: Fahnenspiel, Alexander, 27283 Verden (DE); Zerbst, Oliver, 27283 Verden (DE); Mathiebe, Dirk, 27283 Verden (DE); Köhler, Sven, 27283 Verden (DE)
(74) Vertreter: Eisenführ Speiser

(57) **Zusammenfassung**

Die Erfindung betrifft eine Nahrungsmittelmaschine (1), umfassend: eine stationäre Baugruppe (4), eine rotierbar um eine Rotationsachse (RA) an der stationären Baugruppe (4) gelagerte dynamische Förderbaugruppe (6), die fluidleitend mit der stationären Baugruppe (4) verbunden ist und gemeinsam mit der stationären Baugruppe (4) einen sich entlang der Rotationsachse (RA) erstreckenden Verarbeitungsbereich (8) definiert, der zum Aufnehmen eines Lebensmittels eingerichtet ist, wobei die Förderbaugruppe (6) zum Fördern des Lebensmittels durch den Verarbeitungsbereich (8) eingerichtet ist, und eine zwischen der stationären Baugruppe (4) und der Förderbaugruppe (6) gelagerte Dichtung (10), die zum Abdichten des Verarbeitungsbereichs (8) eingerichtet ist, wobei die stationäre Baugruppe (4) eine koaxial zur Rotationsachse (RA) angeordnete im wesentlichen kreisförmige Dichtungsnut (12) aufweist und die Dichtung (10) in der Dichtungsnut (12) angeordnet ist, die Dichtungsnut (12) mindestens eine sich distal in radialer Richtung (R) erstreckende Vertiefung (14) aufweist, die dazu eingerichtet ist, einen Demontagezugang (16) zum Entfernen der Dichtung (10) aus der Dichtungsnut (12) bereitzustellen. Die Erfindung schlägt vor, dass die Dichtung (10) mindestens eine in radialer Richtung (R) vorstehende Verdrehsicherung (18) umfasst, die dazu eingerichtet ist, die sich in die Vertiefung (14) der Dichtungsnut (12) erstreckt.

## Beschreibung

Die vorliegende Erfindung betrifft eine Nahrungsmittelmaschine, insbesondere eine Füllmaschine. Die Erfindung betrifft ferner eine entsprechende Dichtung für eine solche Nahrungsmittelmaschine. Die Nahrungsmittelmaschine umfasst eine stationäre Baugruppe und eine rotierbar um eine Rotationsachse an der stationären Baugruppe gelagerte dynamische Förderbaugruppe, die fluidleitend mit der stationären Baugruppe verbunden ist und gemeinsam mit der stationären Baugruppe einen sich entlang der Rotationsachse erstreckenden Verarbeitungsbereich definiert, der zum Aufnehmen eines Lebensmittels eingerichtet ist, wobei die Förderbaugruppe zum Fördern des Lebensmittels durch den Verarbeitungsbereich eingerichtet ist. Die Nahrungsmittelmaschine weist ferner eine zwischen der stationären Baugruppe und der Förderbaugruppe gelagerte Dichtung auf, die zum Abdichten des Verarbeitungsbereichs eingerichtet ist. Dabei weist die stationäre Baugruppe eine koaxial zur Rotationsachse angeordnete im wesentlichen kreisförmige Dichtungsnut auf und die Dichtung ist in der Dichtungsnut angeordnet, wobei die Dichtungsnut mindestens eine sich distal in radialer Richtung erstreckende Vertiefung aufweist, die dazu eingerichtet ist, einen Demontagezugang zum Entfernen der Dichtung aus der Dichtungsnut bereitzustellen. Die Erfindung betrifft ferner die Verwendung einer entsprechenden Dichtung.

Auf dem Gebiet der Nahrungsmittelmaschinen, insbesondere Füllmaschinen, ist es üblich, dass diese Maschinen aus einer stationären Baugruppe und einer rotierbaren Förderbaugruppe bestehen. Diese Baugruppen arbeiten zusammen, um Lebensmittel durch einen Verarbeitungsbereich zu fördern. DE 10 2021 133 710 B1 zeigt eine entsprechende Nahrungsmittelmaschine mit einer stationären Baugruppe und einer rotierbaren Förderbaugruppe.

Bekannte Systeme umfassen typischerweise Dichtungen, die zwischen der stationären und der rotierbaren Baugruppe angeordnet sind, um den Verarbeitungsbereich abzudichten und das Austreten von Lebensmitteln oder Flüssigkeiten zu verhindern. Diese Dichtungen müssen dabei aufgrund des Kontakt zu Lebensmitteln im Verarbeitungsbereich eine entsprechende Medienresistenz aufweisen. Gemäß bekannter Technik werden diese Dichtungen in Dichtungsnuten eingebaut, die oft kreisförmig und koaxial zur Rotationsachse der Förderbaugruppe angeordnet sind. Die Dichtungen müssen aufgrund der hohen mechanischen Beanspruchung regelmäßig gewartet oder ausgetauscht werden. Dies kann zeitaufwendig und kompliziert sein, insbesondere wenn die Dichtungen schwer zugänglich sind oder spezielle Werkzeuge benötigt werden.

Aus der DE 20 2015 100 048 U1 ist eine Getränkeabfüllanlage mit einem Mediendrehverteiler bekannt, die zur Abdichtung eines Verteilkanals des Mediendrehverteilers eine als T-förmige Radialdichtung ausgebildete Wellendichtung mit einer Verdrehsicherung aufweist.

Trotz der beträchtlichen Fortschritte auf dem Gebiet der Nahrungsmittelmaschinen gibt es nach wie vor Herausforderungen bei der Abdichtung des Verarbeitungsbereichs. Ein häufiges Problem besteht darin, dass die Dichtungen nicht immer zuverlässig abdichten, was zu Leckagen und Verunreinigungen führen kann. Dies ist primär durch die dynamische Bewegung der rotierbaren Förderbaugruppe und eine damit einhergehende unerwünschten Bewegung der Dichtung gemeinsam mit der Förderbaugruppe bedingt. Andererseits ist eine korrekte Einbaulage der Dichtung entscheiden für eine zuverlässige Abdichtung, was bei häufigem Ein- und Ausbau teilweise nicht gewährleistet ist. Bekannte Systeme bieten ferner oft keine einfachen Möglichkeiten, die Dichtungen schnell und effizient zu entfernen und zu ersetzen, was zu längeren Ausfallzeiten und höheren Wartungskosten führt.

Es ist daher Aufgabe der vorliegenden Erfindung eine Nahrungsmittelmaschine bereitzustellen, die die Nachteile bekannter Systeme zumindest teilweise überwindet.

Die Erfindung löst die eingangs genannte Aufgabe in einem ersten Aspekt durch eine Nahrungsmittelmaschine nach Anspruch 1. Bei einer solchen Nahrungsmittelmaschine handelt es sich insbesondere um eine Füllmaschine, vorzugsweise um eine Vakuumfüllmaschine.

Dabei schlägt die Erfindung in Bezug auf eine Nahrungsmittelmaschine der eingangs genannten Art vor, dass die Dichtung mindestens eine in radialer Richtung vorstehende Verdrehsicherung umfasst, die dazu eingerichtet ist, die sich in die Vertiefung der Dichtungsnut zu erstrecken. Die Verdrehsicherung ist dabei insbesondere als eine an die kreisförmige Dichtung angeformte Nase ausgebildet. Dadurch, dass diese Verdrehsicherung in radialer Richtung - also in Richtung der Kreismitte oder nach außen - vorsteht, stellt diese ein Hindernis dar, dass ein Mitdrehen der Dichtung mit der Förderbaugruppe effektiv verhindert. Durch die Drehung der Förderbaugruppe wirken zwar Kräfte in Umfangsrichtung auf die Dichtung, die Verdrehsicherung hemmt die Bewegung jedoch, da diese sich in die Vertiefung legt und sich aus dieser nicht herausbewegen kann. Die Verdrehsicherung ist also als ein radialer Vorsprung der Dichtung ausgebildet, der eine entsprechende Festigkeit aufweist, sodass dieser durch die rotatorische Bewegung der Förderbaugruppe nicht einfach abreißt. Diese Verdrehsicherung erleichtert ferner das Entfernen der Dichtung aus der Nut, was die Wartung und den Austausch der Dichtung erheblich vereinfacht und somit Ausfallzeiten reduziert. Die Verdrehsicherung bildet dabei gegenüber dem übrigen Tel der kreisförmigen Dichtung einen aus der Dichtungsnut herausragenden Vorsprung, an dem die Dichtung fixiert und händisch oder mit einem Werkzeug aus der Dichtungsnut entnommen werden kann. Die Anordnung und Platzierung der Dichtung ist ferner durch die Verdrehsicherung erleichtert, deren Position zumindest in Umfangsrichtung festgelegt ist.

Weiterbildungen der Erfindung und bevorzugte Merkmale werden in den nachfolgend beschriebenen Ausführungsformen und den abhängigen Ansprüchen erläutert.

Gemäß einer Ausführungsform weist die stationäre Baugruppe eine koaxial zur Rotationsachse angeordnete im Wesentlichen kreisförmige Dichtungsnut auf, in der die Dichtung angeordnet ist. Die Dichtungsnut weist mindestens eine sich distal in radialer Richtung erstreckende Vertiefung auf, die dazu eingerichtet ist, Aufnahme zur Aufnahme der Dichtung und/oder einen Demontagezugang zum Entfernen der Dichtung aus der Dichtungsnut bereitzustellen.

Die Dichtung umfasst vorzugsweise mindestens eine sich in radialer Richtung nach außen vorstehende Verdrehsicherung, die dazu eingerichtet ist, sich in die Vertiefung der Dichtungsnut zu erstrecken. Die Verdrehsicherung ist bevorzugt asymmetrisch ausgebildet. Die asymmetrische Verdrehsicherung sorgt für eine gezielte und präzise Positionierung der Dichtung innerhalb der Dichtungsnut, was die Effizienz und Zuverlässigkeit der Abdichtung erhöht. Durch die asymmetrische Form kann die Verdrehsicherung besser in die Vertiefung der Dichtungsnut eingreifen, was den Sitz der Dichtung in der Dichtungsnut während des Betriebs der Maschine verbessert. Dies verhindert auch bei hohen Drehmomenten und daraus folgenden Belastungen der Dichtung ein Mitdrehen der Dichtung innerhalb der Dichtungsnut und führt so zu einer Reduktion von Leckagen und einer verbesserten Hygiene, da das Lebensmittelprodukt sicherer und effektiver durch den Verarbeitungsbereich gefördert wird. Zudem erleichtert die asymmetrische Verdrehsicherung den Montageprozess, da sie eine klare Orientierung und Richtung für das Positionieren der Dichtung vorgibt. Die Verdrehsicherung fungiert somit gleichzeitig als Codierung, die eine korrekte Einbaulage sicherstellt. Dies reduziert den Aufwand und die Zeit für Wartungsarbeiten erheblich und minimiert das Risiko von Fehlmontagen der Dichtung.

Gemäß einer weiteren Ausführungsform weist die Dichtungsnut einen Hinterschnitt auf, der eine spezifische mechanische Verbindung zwischen der Dichtungsnut und der Dichtung ermöglicht. Diese Ausgestaltung bringt den Vorteil, dass die Dichtung sicher und fest in der Dichtungsnut gehalten wird, wodurch eine verbesserte Abdichtung und Stabilität gewährleistet wird.

Die Verdrehsicherung der Dichtung umfasst bevorzugt eine sich in Umfangsrichtung der Dichtung erstreckende Ausbuchtung, die dazu eingerichtet ist, mit dem Hinterschnitt in Eingriff zu kommen. Die Ausbuchtung ist dazu eingerichtet und ausgebildet, dass die Dichtung nicht nur axial, sondern auch radial in der Nahrungsmittelmaschine fixiert werden kann, was die Betriebssicherheit erhöht. Ferner ermöglicht eine einseitige Ausbuchtung nur eine definierte Montageposition, sodass eine Fehlmontage der Dichtung wirksam vermieden wird. Die Ausbuchtung greift in Folge der Rotation der Förderbaugruppe im Betrieb nur weiter in die Vertiefung ein und sorgt so für eine sichere Positionierung der Dichtung.

Alternativ oder ergänzend weist die Dichtungsnut einen schrägen Einführabschnitt auf, der insbesondere in einem Übergansbereich zwischen der ringförmigen Dichtung und der Verdrehsicherung ausgebildet ist. Dies ist besonders vorteilhaft, da es den Montageprozess vereinfacht und die Gefahr einer Fehlmontage der Dichtung während der Installation verhindert, da lediglich eine Einbauposition aufgrund des schrägen Einführabschnitts möglich ist.

Die Verdrehsicherung der Dichtung ist vorzugsweise korrespondierend ausgebildet und weist eine Schräge auf, die dazu eingerichtet ist, mit dem schrägen Einführabschnitt in Eingriff zu kommen. Diese korrespondierende Ausbildung der Verdrehsicherung und des schrägen Einführabschnitts sorgt für eine präzise und sichere Positionierung der Dichtung in der Dichtungsnut. Somit wird die Sicherheit des Verarbeitungsbereichs erhöht, da die Dichtung aufgrund der Positionierung in der korrekten Einbauposition bedingt durch die korrespondierende Ausbildung der Verdrehsicherung und des Hinterschnitts bzw. der Schräge eine verbesserte Barriere gegen das Austreten von Lebensmitteln oder Flüssigkeiten bietet. Dabei wird ein Mitdrehen der Dichtung wirksam vermieden, da die Verdrehsicherung in die Ausbuchtung bzw. Schräge aufgrund der Drehbewegung nur noch weiter eingreift.

Gemäß einer weiteren Ausführungsform sind die Vertiefung und die Verdrehsicherung asymmetrisch ausgebildet, was bedeutet, dass ihre geometrischen Formen und Abmessungen nicht symmetrisch sind. Die asymmetrische Ausbildung der Vertiefung und der Verdrehsicherung ist dabei korrespondierend zueinander, also aufeinander abgestimmt. Diese Asymmetrie stellt sicher, dass die Verdrehsicherung ausschließlich in einer bestimmten Einbaulage von der Vertiefung aufnehmbar ist. Dies bringt mehrere Vorteile mit sich. Erstens wird dadurch die Montage der Dichtung vereinfacht und beschleunigt, da die asymmetrische Formgebung eine eindeutige Orientierung vorgibt und somit Verwechslungen oder fehlerhafte Einbauversuche vermieden werden. Die Verdrehsicherung kann nur in einer bestimmten Position in die Vertiefung eingeführt werden, was die korrekte Platzierung der Dichtung gewährleistet. Zweitens erhöht diese Konstruktion die Betriebssicherheit der Maschine, da die Dichtung in einer festgelegten Position fixiert wird und somit ein Verrutschen oder eine Fehlpositionierung während des Betriebs ausgeschlossen ist. Dies ist besonders wichtig, um eine zuverlässige Abdichtung des Verarbeitungsbereichs zu gewährleisten, in dem das Lebensmittel gefördert wird. Die asymmetrische Gestaltung der Vertiefung und der Verdrehsicherung trägt somit zur Vermeidung von Leckagen und zur Aufrechterhaltung der hygienischen Bedingungen bei, die für die Verarbeitung von Lebensmitteln unerlässlich sind.

Gemäß einer weiteren Ausführungsform weist die Dichtungsnut mindestens eine erste Vertiefung und eine zweite Vertiefung auf, die um einen Versatzwinkel relativ zur ersten Vertiefung versetzt ist. Der Versatzwinkel ist ungleich 180°. Diese Anordnung der Vertiefungen ermöglicht eine verbesserte Demontage und Montage der Dichtung, da die beiden Vertiefungen eine eindeutige Orientierung vorgeben und somit Verwechslungen oder fehlerhafte Einbauversuche vermieden werden. Die Verdrehsicherungen können nur in einer bestimmten Position in die Vertiefungen eingeführt werden, was die korrekte Platzierung der Dichtung gewährleistet. Auch die Bereitstellung von zwei oder mehr Vertiefungen mit einem Versatzwinkel ungleich 180° trägt somit zur Vermeidung von Leckagen und zur Aufrechterhaltung der hygienischen Bedingungen bei, die für die Verarbeitung von Lebensmitteln unerlässlich sind.

Gemäß einer weiteren Ausführungsform erstrecken sich sowohl die Vertiefung als auch die Verdrehsicherung in radialer Richtung nach außen. Die radial nach außen gerichtete Vertiefung bietet einen klaren und zugänglichen Weg, um die Dichtung zu erreichen und zu entfernen, was die Wartungsarbeiten erheblich vereinfacht und beschleunigt. Gleichzeitig sorgt die radial nach außen gerichtete Verdrehsicherung dafür, dass die Dichtung sicher in der Vertiefung gehalten wird, wodurch eine zuverlässige Abdichtung des Verarbeitungsbereichs gewährleistet wird. Diese konstruktive Gestaltung trägt dazu bei, die Integrität des Verarbeitungsbereichs zu bewahren, indem sie das Risiko von Leckagen minimiert und somit die Effizienz und Hygiene der Nahrungsmittelmaschine erhöht.

Gemäß einer weiteren Ausführungsform weist die Vertiefung in einer Ebene, deren Flächennormale die Rotationsachse bildet, eine erste Projektionsfläche auf, während die Verdrehsicherung eine zweite Projektionsfläche aufweist, die kleiner als die erste Projektionsfläche ist. Diese spezifische Gestaltung der Projektionsflächen ermöglicht eine präzisere und kontrolliertere Demontage der Dichtung, da ein Werkzeug zur Demontage der Dichtung in der Vertiefung unter die Verdrehsicherung bewegt werden kann, um in diese einzugreifen. Die bedingt durch die größere Projektionsfläche folglich auch größere Vertiefung bietet dafür ausreihend Platz. Dies erleichtert nicht nur die Wartung und den Austausch der Dichtung, sondern minimiert auch das Risiko von Beschädigungen an der Dichtung oder der Dichtungsnut während des Demontageprozesses.

Gemäß einer weiteren Ausführungsform sind die Dichtung und die Verdrehsicherung integral ausgebildet. Diese integrale Ausbildung bedeutet, dass die Dichtung und die Verdrehsicherung aus einem einzigen Materialstück bestehen und nicht separat gefertigt und anschließend zusammengefügt werden. Diese Konstruktion ermöglicht eine verbesserte mechanische Stabilität und eine zuverlässigere Abdichtung des Verarbeitungsbereichs, da keine potenziellen Schwachstellen an Verbindungsstellen zwischen der Dichtung und der Verdrehsicherung vorhanden sind. Dies ist insbesondere im Hinblick auf die hohen Belastungen der Dichtung durch die Verwendung in einer Nahrungsmittelmaschine, wie einer Füllmaschine, essentiell. Durch die integrale Ausbildung wird die Handhabung der Dichtung vereinfacht, da weniger Einzelteile erforderlich sind und die Gefahr des Verlusts oder der Beschädigung von Einzelkomponenten minimiert wird. Zudem wird die Herstellung der Dichtung effizienter, da der Produktionsprozess vereinfacht wird und weniger Montageschritte erforderlich sind.

Gemäß einer weiteren Ausführungsform ist die stationäre Baugruppe als ein Trichtereinlauf ausgebildet. Der Trichtereinlauf sorgt dafür, dass das Lebensmittel gleichmäßig und kontrolliert in die Förderbaugruppe gelangt. Diese Förderbaugruppe ist als eine Zubringerkurve der Füllmaschine ausgebildet, sodass sie das Lebensmittel entlang einer vorgegebenen Bahn bewegt, um es durch den Verarbeitungsbereich zu transportieren. Die Zubringerkurve ermöglicht eine präzise Steuerung der Bewegung des Lebensmittels, was besonders wichtig ist, um eine gleichmäßige Füllung zu gewährleisten und die Qualität des Endprodukts zu sichern.

Gemäß einer weiteren Ausführungsform ist die Nahrungsmittelmaschine eine Füllmaschine, was bedeutet, dass sie speziell für das Portionieren von Lebensmitteln bzw. für das Befüllen von Hüllen, wie Kunst- oder Naturdärmen mit Lebensmitteln konzipiert ist. Besonders bevorzugt handelt es sich dabei um eine Vakuumfüllmaschine.

Die stationäre Baugruppe ist bevorzugt als ein Trichterflansch ausgebildet. Der Trichterflansch ermöglicht eine effiziente Zuführung des Lebensmittels in die Förderbaugruppe und stellt sicher, dass das Lebensmittel gleichmäßig und ohne Verschütten in den Verarbeitungsbereich gelangt. Die Förderbaugruppe ist als ein Förderwerk der Füllmaschine ausgebildet, was bedeutet, dass sie die Funktion hat, das Lebensmittel durch den Verarbeitungsbereich zu transportieren. Das Förderwerk ist bevorzugt eine Pumpe, was darauf hinweist, dass es sich um eine mechanische Vorrichtung handelt, die das Lebensmittel durch Erzeugen eines Druckunterschieds bewegt. Die Pumpe sorgt für einen kontinuierlichen und kontrollierten Fluss des Lebensmittels, was für die gleichmäßige Befüllung der Behälter oder Hohlräume entscheidend ist. Die Kommunikation zwischen den Komponenten erfolgt durch die fluidleitende Verbindung zwischen der stationären Baugruppe und der Förderbaugruppe, die sicherstellt, dass das Lebensmittel ohne Unterbrechung vom Trichterflansch zur Pumpe und schließlich in den Verarbeitungsbereich gelangt. Die Dichtung, die zwischen der stationären Baugruppe und der Förderbaugruppe gelagert ist, spielt eine entscheidende Rolle bei der Aufrechterhaltung der Hygiene und der Vermeidung von Leckagen. Die Dichtungsnut, die koaxial zur Rotationsachse angeordnet ist, und die darin befindliche Dichtung mit der sich radial erstreckenden Verdrehsicherung, die in die Vertiefung der Dichtungsnut greift, gewährleisten eine zuverlässige Abdichtung des Verarbeitungsbereichs.

Gemäß einer weiteren Ausführungsform weist die Dichtung eine erste Höhe in axialer Richtung auf und die Dichtungsnut weist eine zweite Höhe in axialer Richtung auf, die kleiner als die erste Höhe ist, derart, dass durch die stationäre Baugruppe und die Förderbaugruppe Axialkräfte auf die Dichtung wirken. Die unterschiedliche Höhe der Dichtung und der Dichtungsnut gewährleistet, dass die Dichtung in axialer Richtung komprimiert wird, wenn die stationäre Baugruppe und die Förderbaugruppe zusammengebaut sind. Diese Kompression führt zu einer verbesserten Abdichtung des Verarbeitungsbereichs, da die Dichtung durch die Axialkräfte fest gegen die Innenwände der Dichtungsnut gedrückt wird. Dadurch wird das Risiko von Leckagen minimiert, was besonders wichtig ist, um die Hygiene und Effizienz der Nahrungsmittelmaschine zu gewährleisten. Weiterhin ermöglicht die Anordnung der Dichtung mit einer größeren Höhe als die Dichtungsnut eine einfache und effektive Demontage und Wartung. Wenn die Förderbaugruppe von der stationären Baugruppe getrennt wird, entspannt sich die Dichtung und kann leicht aus der Dichtungsnut entfernt werden, insbesondere in Verbindung mit der mindestens einen sich distal in radialer Richtung erstreckenden Vertiefung, die einen Demontagezugang bereitstellt. Mit anderen Worten ist die Dichtung bevorzugt als eine Art Quetschdichtung ausgebildet, die dazu eingerichtet ist, im eingesetzten Zustand aus einer korrespondierenden Dichtungsnut leicht herauszustehen, sodass die Dichtung beim Schließen der Nahrungsmittelmaschine durch Koppeln der stationären Baugruppe und der Förderbaugruppe Axialkräfte erfährt, wodurch die Dichtung die Dichtungsnut noch besser ausfüllt und die Dichtwirkung verbessert wird.

Gemäß einer weiteren Ausführungsform weist die Dichtung eine erste Höhe in radialer Richtung auf und die Dichtungsnut weist eine zweite Höhe in radialer Richtung auf, die kleiner als die erste Höhe ist, derart, dass durch die stationäre Baugruppe und die Förderbaugruppe Radialkräfte auf die Dichtung wirken. Durch die unterschiedliche Höhe der Dichtung und der Dichtungsnut wird eine gezielte Kompression der Dichtung erreicht, wenn diese in die Dichtungsnut eingesetzt wird. Diese Kompression stellt sicher, dass die Dichtung fest in der Nut sitzt und somit eine effektive Abdichtung des Verarbeitungsbereichs gewährleistet wird. Die Radialkräfte, die durch die stationäre Baugruppe und die rotierbare Förderbaugruppe auf die Dichtung ausgeübt werden, tragen zusätzlich zur Stabilität und Dichtheit der Verbindung bei. Dies ist besonders wichtig, um das Austreten von Lebensmitteln oder Flüssigkeiten aus dem Verarbeitungsbereich zu verhindern, was die Hygiene und Effizienz der Nahrungsmittelmaschine erhöht. Darüber hinaus ermöglicht die Anordnung der Dichtung mit einer größeren Höhe als die Dichtungsnut eine einfache Demontage und Wartung. Die Dichtung kann durch die Vertiefung in der Dichtungsnut leicht entfernt werden, ohne dass spezielle Werkzeuge oder komplizierte Verfahren erforderlich sind. Dies reduziert die Ausfallzeiten der Maschine und erleichtert die Reinigung und den Austausch der Dichtung, was wiederum die Lebensdauer der Maschine verlängert und die Betriebskosten senkt. Mit anderen Worten ist die Dichtung bevorzugt als eine Art Quetschdichtung ausgebildet, die dazu eingerichtet ist, im eingesetzten Zustand aus einer korrespondierenden Dichtungsnut leicht herauszustehen, sodass die Dichtung beim Schließen der Nahrungsmittelmaschine durch Koppeln der stationären Baugruppe und der Förderbaugruppe Radialkräfte erfährt, wodurch die Dichtung die Dichtungsnut noch besser ausfüllt und die Dichtwirkung verbessert wird.

Vorzugsweise ist die Dichtung als Axialdichtung ausgeführt. Die Axialdichtung ist so konzipiert, dass sie entlang der Achse der Rotation abdichtet, was bedeutet, dass sie eine verbesserte Abdichtung entlang der Rotationsachse der dynamischen Förderbaugruppe und der stationären Baugruppe gewährleistet. Die Axialdichtung sorgt dafür, dass der Verarbeitungsbereich, der zum Aufnehmen und Fördern des Lebensmittels eingerichtet ist, effektiv abgedichtet bleibt, selbst unter den dynamischen Bedingungen der Rotation. Dies trägt dazu bei, dass keine Leckagen auftreten und die Hygieneanforderungen in der Lebensmittelverarbeitung eingehalten werden. Darüber hinaus erleichtert die axiale Ausrichtung der Dichtung die Montage und Demontage, da sie entlang der Achse der Maschine bewegt werden kann, was den Wartungsaufwand reduziert und die Betriebszeit der Maschine erhöht.

Gemäß einer weiteren Ausführungsform der Nahrungsmittelmaschine umfasst die Vertiefung eine abgerundete konkave Form. Die abgerundete konkave Form der Vertiefung erleichtert die Demontage der Dichtung erheblich, da sie einen Zugang zur Dichtung bietet. Dies reduziert die Gefahr von Beschädigungen an der Dichtung während des Entfernungsprozesses, da scharfe Kanten oder Ecken, die die Dichtung einreißen oder verformen könnten, vermieden werden. Darüber hinaus ermöglicht die abgerundete Form eine vereinfachte Reinigung, da tendenziell schwerer zugängliche Ecken, in denen sich Lebensmittelabsetzten könnten, vermieden werden. Dies ist besonders wichtig in industriellen Anwendungen, wo die Maschinen häufig gereinigt und gewartet werden müssen, um hygienische Standards zu erfüllen. Die abgerundete Form der Vertiefung kann auch die Lebensdauer der Dichtung verlängern, da sie weniger anfällig für Abnutzung und Beschädigungen ist, die durch ungleichmäßige Druckverteilung oder mechanische Beanspruchung verursacht werden könnten. Darüber hinaus kann die abgerundete konkave Form der Vertiefung die Herstellung und Montage der Nahrungsmittelmaschine vereinfachen, da sie weniger präzise Toleranzen erfordert und somit die Produktionskosten senken kann.

Gemäß einer weiteren bevorzugten Ausführungsform weist die Dichtung eine Materialstärke in axialer Richtung, die an das wirkende Drehmoment zwischen der rotierenden Baugruppe und der stationären Baugruppe angepasst ist. Dementsprechend weist auch die Verdrehsicherung eine Materialstärke in axialer Richtung, die an das wirkende Drehmoment zwischen der rotierenden Baugruppe und der stationären Baugruppe angepasst ist. Die Materialstärke ist so zu wählen, dass ein Abreißen der Verdrehsicherung von der übrigen Dichtung im Betrieb verhindert wird.

Die Erfindung löst die eingangs genannte Aufgabe in einem zweiten Aspekt durch eine Dichtung nach Anspruch 15. Diese Dichtung ist zum Einbau in einer Nahrungsmittelmaschine, insbesondere in einer Nahrungsmittelmaschine gemäß dem ersten Aspekt der Erfindung ausgebildet. Die die Dichtung ist im Wesentlichen kreisförmig ausgebildet und weist einen Dichtwerkstoff auf, derart, dass die Dichtung dazu eingerichtet ist, in einer im Wesentlichen kreisförmigen Dichtungsnut der Nahrungsmittelmaschine zwischen einer stationären Baugruppe und einer rotierbar gelagerten Förderbaugruppe aufgenommen zu werden. Die Dichtung umfasst mindestens eine in radialer Richtung vorstehende Verdrehsicherung, die speziell dazu eingerichtet ist, sich in eine korrespondierende Vertiefung der Dichtungsnut, in welche die Dichtung einsetzbar ist, zu erstrecken. Sofern eine solche Vertiefung nicht vorhanden ist, kann die Verdrehsicherung auch zwischen den beiden abzudichtenden Teilen eingeklemmt werden. Die Verdrehsicherung ist dabei aus einem Dichtwerkstoff mit einer entsprechenden Festigkeit gefertigt, die es erlaubt, die im Betrieb einer Nahrungsmittelmaschine, insbesondere einer Füllmaschine auftretenden Kräfte aufzunehmen, ohne dass die Verdrehsicherung abreißt. Diese Verdrehsicherung spielt eine entscheidende Rolle bei der Sicherstellung der Abdichtung, indem sie eine Relativbewegung der Dichtung in Umfangsrichtung sperrt. Darüber hinaus ermöglicht die, sich in die Vertiefung der Dichtungsnut erstreckende Verdrehsicherung, eine erleichterte Demontage. Dies bedeutet, dass die Dichtung bei Wartungsarbeiten oder im Falle eines Austauschs einfacher entfernt werden kann, indem die Dichtung an der Verdrehsicherung fixiert und anschließend aus einer Dichtungsnut, in der sie aufgenommen ist, hinausbewegt wird. Die Dichtung macht sich durch die Verdrehsicherung die in Bezug auf den ersten Aspekt der Erfindung beschriebenen Vorteile zu Eigen. Vorteile und bevorzugte Ausführungsformen der Nahrungsmittelmaschine gemäß dem ersten Aspekt der Erfindung sind ebenso Vorteile und bevorzugte Ausführungsformen der Dichtung gemäß dem zweiten Aspekt der Erfindung. Die in den Unteransprüchen beschriebenen Weiterbildungen der Nahrungsmittelmaschine gemäß dem ersten Aspekt der Erfindung betreffen somit ebenso Weiterbildungen der Dichtung gemäß dem zweiten Aspekt der Erfindung.

Bei der Dichtung handelt es sich insbesondere um eine Füllmaschinendichtung. Eine solche Füllmaschinendichtung ist bevorzugt aus einem Material mit Lebensmittelzulassung gefertigt.

Die Erfindung löst die eingangs genannte Aufgabe in einem dritten Aspekt durch die Verwendung einer Dichtung gemäß dem zweiten Aspekt der Erfindung in einer Nahrungsmittelmaschine gemäß dem ersten Aspekt der Erfindung. Die Erfindung gemäß dem dritten Aspekt macht sich durch die Verwendung der Dichtung mit Verdrehsicherung die in Bezug auf den ersten Aspekt der Erfindung beschriebenen Vorteile zu Eigen. Vorteile und bevorzugte Ausführungsformen der Nahrungsmittelmaschine und insbesondere deren Dichtung gemäß dem ersten Aspekt und dem zweiten Aspekt der Erfindung sind ebenso Vorteile und bevorzugte Ausführungsformen der erfindungsgemäßen Verwendung gemäß dem dritten Aspekt der Erfindung. Insbesondere betrifft die Erfindung ferner die Verwendung eines in radialer Richtung vorstehenden Vorsprungs einer kreisförmigen Dichtung als Verdrehsicherung für den Einsatz in einer Füllmaschine zum Abdichten, eines durch eines Verarbeitungsbereichs, der durch eine stationäre Baugruppe und eine rotierbare Förderbaugruppe gebildet wird.

Die Erfindung wird im Folgenden unter Bezugnahme auf die beiliegenden Figuren anhand bevorzugter Ausführungsbeispiele beschrieben. Hierbei zeigen:
- FIG. 1:: eine Nahrungsmittelmaschine gemäß einer bevorzugten Ausführungsform in einer perspektivischen Ansicht;
- FIG. 2a:: ein erster Ausschnitt der Nahrungsmittelmaschine gemäß FIG. 1 in einer Draufsicht;
- FIG. 2b:: der Ausschnitt der Nahrungsmittelmaschine gemäß FIG.2a in einer geschnittenen Seitenansicht;
- FIG. 3a:: ein zweiter Ausschnitt der Nahrungsmittelmaschine gemäß FIG. 1 in einer Draufsicht;
- FIG. 3b:: der Ausschnitt der Nahrungsmittelmaschine gemäß FIG.3a in einer geschnittenen Seitenansicht;
- FIG. 4a:: der Ausschnitt der Nahrungsmittelmaschine gemäß FIG.3a mit montierter Dichtung;
- FIG. 4b:: eine Detaildarstellung des Ausschnitts der Nahrungsmittelmaschine gemäß FIG.4a mit montierter Dichtung;
- FIG. 5a:: der Ausschnitt der Nahrungsmittelmaschine gemäß FIG.5a mit montierter Dichtung;
- FIG. 5b:: eine Detaildarstellung des Ausschnitts der Nahrungsmittelmaschine gemäß FIG. 5a mit montierter Dichtung;
- FIG. 6a: ein Ausschnitt der Dichtung gemäß einer bevorzugten Ausführungsform;
- FIG. 6b: ein Ausschnitt der Dichtung gemäß einer weiteren bevorzugten Ausführungsform;
- FIG. 7a: eine Draufsicht der Dichtung gemäß FIG. 6b;
- FIG. 7b: eine geschnittene Seitenansicht der Dichtung gemäß FIG. 7a; und
- FIG. 7c:: eine Detaildarstellung des Ausschnitts der Dichtung gemäß FIG. 7b.

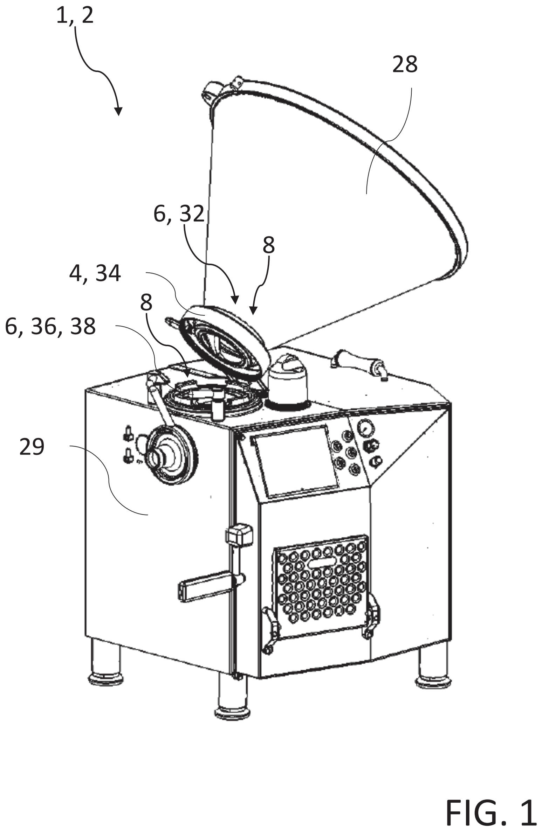

FIG. 1 zeigt eine Nahrungsmittelmaschine 1, insbesondere eine Füllmaschine 2. Die Nahrungsmittelmaschine 1 besteht aus einer stationären Baugruppe 4 und einer dynamischen Förderbaugruppe 6, die um eine Rotationsachse RA rotierbar an der stationären Baugruppe 4 gelagert ist. Die Förderbaugruppe 6 ist fluidleitend mit der stationären Baugruppe 4 verbunden und definiert gemeinsam mit dieser einen sich entlang der Rotationsachse RA erstreckenden Verarbeitungsbereich 8, der zum Aufnehmen eines Lebensmittels eingerichtet ist. Die Förderbaugruppe 6 ist zum Fördern des Lebensmittels durch den Verarbeitungsbereich 8 eingerichtet.

Die Füllmaschine 2 umfasst einen Trichter 28, der als Einlass für das zu verarbeitende Lebensmittel dient.

Die stationäre Baugruppe 4 umfasst einen Trichterflansch 34, über den der Trichter 28 am unteren Gehäuseteil 29 befestigt ist. Die Nahrungsmittelmaschine 1 ist auf einem stabilen unteren Gehäuseteil 29 montiert, das Bedienelemente und ein Display zur Steuerung und Überwachung der Prozesse enthält. Die Nahrungsmittelmaschine 1 steht auf verstellbaren Füßen, die eine stabile Positionierung und Anpassung an unebene Oberflächen ermöglichen.

Die Förderbaugruppe 6 umfasst eine Zubringerkurve 32, die im Trichter 28 angeordnet ist, und ein Förderwerk 36. Das Förderwerk 36 ist insbesondere als Pumpe 38 ausgebildet und im unteren Gehäuseteil 29 angeordnet. Diese Komponenten arbeiten zusammen, um das Lebensmittel effizient durch den Verarbeitungsbereich 8 zu transportieren.

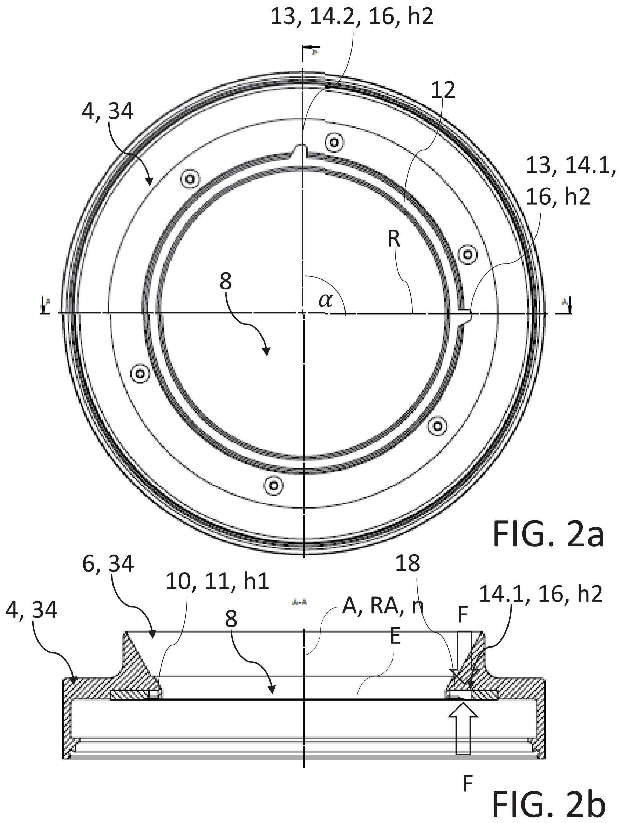

Mindestens eine Dichtung 10 (nicht gezeigt) ist zwischen der stationären Baugruppe 4 und der Förderbaugruppe 6 gelagert, um den Verarbeitungsbereich 8 abzudichten. Die stationäre Baugruppe 4 weist dafür an mindestens einer Position eine koaxial zur Rotationsachse RA angeordnete, im Wesentlichen kreisförmige Dichtungsnut 12 (nicht gezeigt) auf, in der die Dichtung 10 angeordnet ist, wie im Folgenden in FIG. 2 bis FIG. 7 im Detail erläutert.

FIG. 2a und FIG. 2b zeigen einen Ausschnitt der Nahrungsmittelmaschine 1 im Bereich der stationären Baugruppe 4, insbesondere eines Trichterflansches 32. FIG. 2a zeigt eine Draufsicht und FIG. 2b zeigt einen Querschnitt der Nahrungsmittelmaschine 1 entlang der Linie I-I aus FIG. 2a.

Die Förderbaugruppe 6 ist fluidleitend mit der stationären Baugruppe 4 verbunden und gemeinsam definieren sie den Verarbeitungsbereich 8, der zum Aufnehmen eines Lebensmittels eingerichtet ist. Die Förderbaugruppe 6 ist zum Fördern des Lebensmittels durch den Verarbeitungsbereich 8 eingerichtet.

Die stationäre Baugruppe 4 ist als Trichterflansch 34 ausgebildet, und die rotierbare Förderbaugruppe 6 ist als Zubringerkurve 32 ausgebildet.

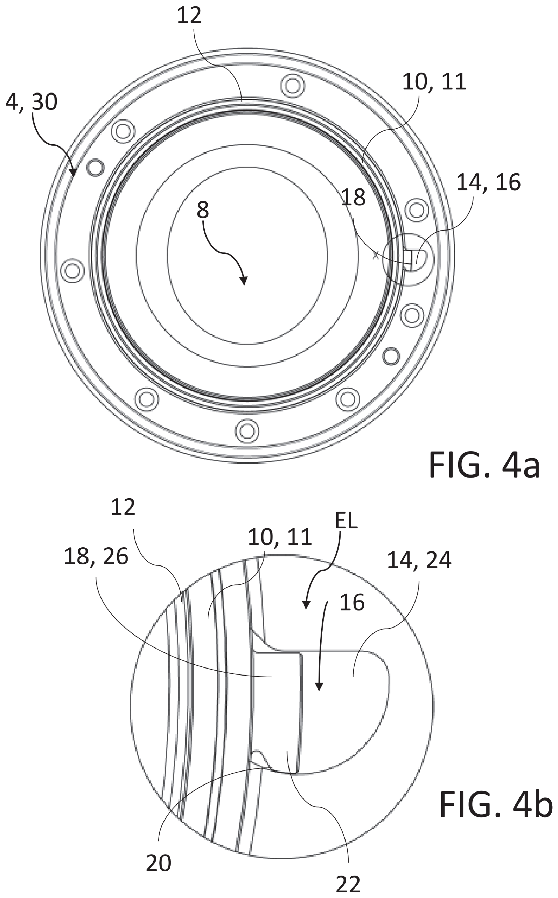

Die stationäre Baugruppe 4 ist koaxial zur Rotationsachse RA angeordnet und weist eine im Wesentlichen kreisförmige Dichtungsnut 12 auf. Die Dichtungsnut 12 enthält mindestens eine Vertiefung, vorliegend bevorzugt sogar zwei Vertiefungen 14.1, 14.2, die sich distal in radialer Richtung R erstrecken und jeweils einen Demontagezugang 16 zum Entfernen einer darin aufgenommenen Dichtung 10 (vgl. FIG. 4a bis FIG. 7c) bereitstellen. Die in FIG. 2b angedeutete Dichtung 10 in der ersten Vertiefung 14.1 umfasst mindestens eine sich in radialer Richtung R nach vorstehende Verdrehsicherung 18, die in die erste Vertiefung 14.1 der Dichtungsnut 12 hineinragt. Die zweite Vertiefung 14.2 ist bevorzugt identisch zur ersten Vertiefung 14.1 ausgebildet. Die Vertiefungen 14.1, 14.2 und die Verdrehsicherungen 18 sind asymmetrisch ausgebildet, sodass die Verdrehsicherungen 18 jeweils ausschließlich in einer bestimmten Einbaulage EL in die Vertiefung 14 Vertiefungen 14.1, 14.2 passen. Die erste Vertiefung 14.1 und die zweite Vertiefung 14.2 sind um einen Versatzwinkel α relativ zur ersten Vertiefung 14.1 versetzt, wobei der Versatzwinkel α ungleich 180° ist.

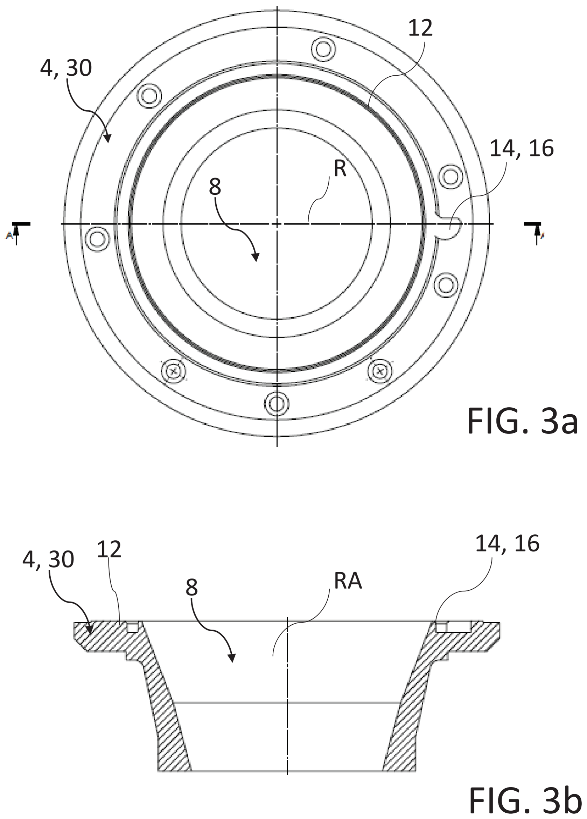

FIG. 3a und FIG. 3b zeigen einen Ausschnitt der Nahrungsmittelmaschine 1 im Bereich der stationären Baugruppe 4, insbesondere im Bereich eines Trichtereinlaufs 30. FIG. 3a zeigt eine Draufsicht und FIG. 3b zeigt einen Querschnitt der Nahrungsmittelmaschine 1 entlang der Linie I-I aus FIG. 3a.

Die stationäre Baugruppe 4 ist als Trichtereinlauf 30 ausgebildet und umfasst eine koaxial zur Rotationsachse RA angeordnete, im Wesentlichen kreisförmige Dichtungsnut 12. Die Dichtungsnut 12 verläuft kreisförmig um den Verarbeitungsbereich 8. Die Dichtungsnut 12 erstreckt sich entlang der Rotationsachse RA. Die Dichtungsnut 12 weist mindestens eine sich distal in radialer Richtung R erstreckende Vertiefung 14 auf, die dazu eingerichtet ist, einen Demontagezugang 16 zum Entfernen einer darin aufgenommenen Dichtung 10 (vgl. FIG. 4a bis FIG. 7c) aus der Dichtungsnut 12 bereitzustellen. Die Vertiefung 14 ist asymmetrisch ausgebildet, was eine spezifische Einbaulage EL der Dichtung erforderlich macht.

Die Dichtungsnut 12 und die Vertiefung 14 sind so gestaltet, dass sie eine effiziente Abdichtung und einfache Demontage der Dichtung ermöglichen. Die Vertiefung 14 bietet ausreichend Platz, um die Dichtung aus der Nut zu entfernen, ohne die Integrität der Dichtung oder der Baugruppe zu beeinträchtigen.

Die stationäre Baugruppe 4 ist so konzipiert, dass sie eine zuverlässige und hygienische Verarbeitung von Lebensmitteln ermöglicht. Der Trichtereinlauf 30 leitet das Lebensmittel in den Verarbeitungsbereich 8, wo es von der rotierbaren Förderbaugruppe weitertransportiert wird. Die Dichtungsnut 12 und die Dichtung 10 sorgen dafür, dass der Verarbeitungsbereich 8 abgedichtet bleibt, um eine Kontamination des Lebensmittels zu verhindern und die Effizienz der Nahrungsmittelmaschine 1 zu gewährleisten.

FIG. 4a zeigt eine Draufsicht des Ausschnitts der Nahrungsmittelmaschine 1 gemäß FIG. 3a mit einer in der Dichtungsnut 12 des Trichtereinlaufs 30 aufgenommenen Dichtung 10. FIG. 4b zeigt eine Detaildarstellung

Die Dichtung 10 ist vorliegend als Axialdichtung 11 ausgebildet und umfasst mindestens eine sich radial nach außen erstreckende Verdrehsicherung 18, die in eine Vertiefung 14 der Dichtungsnut 12 hineinragt. Diese Vertiefung 14 dient als Demontagezugang 16 zum Entfernen der Dichtung 10 aus der Dichtungsnut 12.

Die Dichtung 10 dient zum Abdichten des Verarbeitungsbereichs 8, der sich entlang der Rotationsachse RA erstreckt. Die Dichtung 10 ist bevorzugt integral mit der Verdrehsicherung 18 ausgebildet, die sich in radialer Richtung R nach außen erstreckt und in die Vertiefung 14 der Dichtungsnut 12 hineinragt.

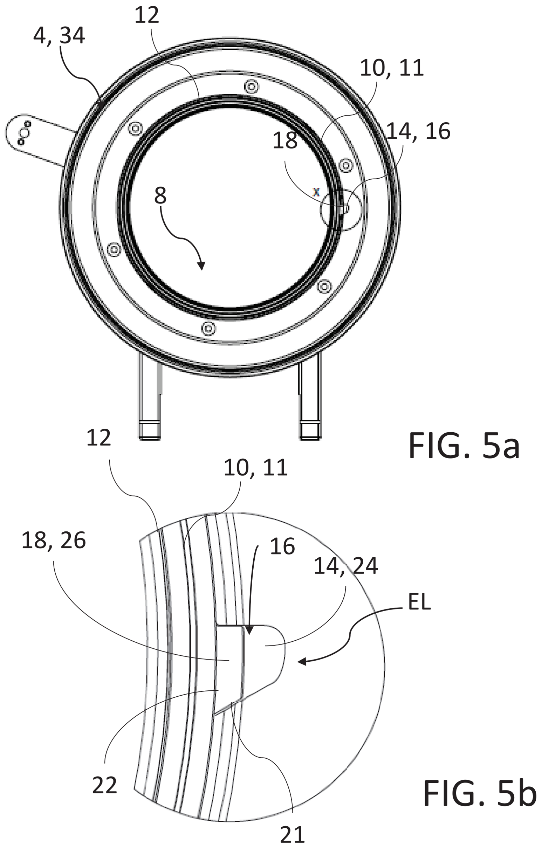

Die Vertiefung 14 weist einen Hinterschnitt 20 auf, und die Verdrehsicherung 18 der Dichtung 10 hat eine sich in Umfangsrichtung erstreckende Ausbuchtung 22, die mit dem Hinterschnitt 20 in Eingriff kommt. Alternativ kann die Dichtungsnut 12 einen schrägen Einführabschnitt 21 aufweisen (vgl. FIG. 5a und FIG. 5b), und die Verdrehsicherung 18 hat eine korrespondierend ausgebildete Ausbuchtung 22, die mit dem schrägen Einführabschnitt 21 in Eingriff kommt.

In einer Ebene E, deren Flächennormale n die Rotationsachse RA bildet (vgl. FIG. 2b), weist die Vertiefung 14 eine erste Projektionsfläche 24 und die Verdrehsicherung 18 eine zweite Projektionsfläche 26 auf, die kleiner als die erste Projektionsfläche 24 ist.

FIG. 4b zeigt eine vergrößerte Detailansicht der Dichtungsnut 12 und der Dichtung 10 aus FIG. 4a. In dieser Detailansicht sind die Vertiefung 14 und die Verdrehsicherung 18 im Detail gezeigt. Die Vertiefung 14 erstreckt sich distal in radialer Richtung R und bildet den Demontagezugang 16. Die Dichtung 10 weist die Verdrehsicherung 18 auf, die asymmetrisch ausgebildet ist und sich in die Vertiefung 14 erstreckt. Die Verdrehsicherung 18 ist so gestaltet, dass sie ausschließlich in einer bestimmten Einbaulage EL von der Vertiefung 14 aufgenommen werden kann.

Die Dichtungsnut 12 weist zudem den Hinterschnitt 20 auf, der mit einer sich in Umfangsrichtung der Dichtung 10 erstreckenden Ausbuchtung 22 der Verdrehsicherung 18 in Eingriff kommt. Diese Ausbuchtung 22 ist so eingerichtet, dass sie eine sichere Verbindung zwischen der Dichtung 10 und der Dichtungsnut 12 gewährleistet.

FIG. 5a zeigt eine Draufsicht auf die Nahrungsmittelmaschine 1 im Bereich der stationären Baugruppe 4, insbesondere eines Trichterflansches 34.

In der Mitte des Trichterflansches 34 befindet sich der Verarbeitungsbereich 8, der durch die rotierbare Förderbaugruppe (nicht dargestellt) und die stationäre Baugruppe 4 definiert wird. Die Dichtungsnut 12 ist koaxial zur Rotationsachse RA angeordnet und weist eine im Wesentlichen kreisförmige Form auf. Innerhalb der Dichtungsnut 12 ist die Dichtung 10, die als Axialdichtung 11 ausgebildet ist, angeordnet. Die Dichtung 10 umfasst mindestens eine sich in radialer Richtung R nach außen vorstehende Verdrehsicherung 18, die in eine Vertiefung 14 der Dichtungsnut 12 hineinragt. Diese Vertiefung 14 stellt einen Demontagezugang 16 bereit, der das Entfernen der Dichtung 10 aus der Dichtungsnut 12 ermöglicht.

FIG. 5b zeigt eine vergrößerte Detailansicht des Bereichs um die Vertiefung 14 und die Verdrehsicherung 18. Die Vertiefung 14 erstreckt sich distal in radialer Richtung R und ist asymmetrisch ausgebildet, sodass die Verdrehsicherung 18 nur in einer spezifischen Einbaulage EL in die Vertiefung 14 passt. Die Verdrehsicherung 18 weist eine Ausbuchtung 22 mit einer schräg zulaufenden Seitenfläche auf, die dazu eingerichtet ist, mit einem schrägen Einführabschnitt 21 der Dichtungsnut 12 in Eingriff zu kommen. Diese Ausbuchtung 22 ermöglicht eine sichere Fixierung der Dichtung 10 innerhalb der Dichtungsnut 12, indem sie mit dem Hinterschnitt 20 der Dichtungsnut 12 in Eingriff kommt.

Die Dichtung 10 und die Verdrehsicherung 18 sind integral ausgebildet, was eine einheitliche und robuste Struktur gewährleistet.

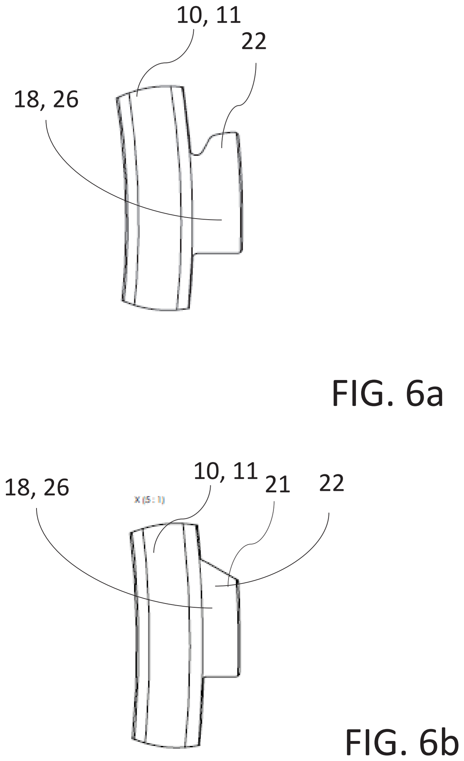

FIG. 6a und FIG. 6b zeigen detaillierte Ansichten einer Dichtung 10, 11, die in einer Nahrungsmittelmaschine 1 verwendet wird. Diese Dichtung ist speziell für die Abdichtung eines Verarbeitungsbereichs in einer rotierbaren Förderbaugruppe konzipiert.

In FIG. 6a und FIG. 6b ist die Dichtung 10, 11 dargestellt, die eine integrale Verdrehsicherung 18 aufweist. Diese Verdrehsicherung erstreckt sich in radialer Richtung und ist dazu eingerichtet, in eine entsprechende Vertiefung der Dichtungsnut einzugreifen. Die Dichtung 10, 11 ist so gestaltet, dass sie eine zuverlässige Abdichtung zwischen der stationären Baugruppe und der rotierbaren Förderbaugruppe gewährleistet.

Die Verdrehsicherung 18 ist asymmetrisch ausgebildet, was in den Figuren durch die unterschiedliche Form und Position der Verdrehsicherung verdeutlicht wird. Diese Asymmetrie stellt sicher, dass die Dichtung nur in einer spezifischen Einbaulage korrekt montiert werden kann, was die Montage und Demontage erleichtert und gleichzeitig die Dichtungsfunktion optimiert.

In FIG. 6a ist die Verdrehsicherung 18 gemäß FIG. 4a und FIG. 4b isoliert dargestellt. Die Verdrehsicherung 18 weist die Ausbuchtung 22 auf und erstreckt sich im Bereich einer Projektionsfläche 26. Diese Ausbuchtung 22 erstreckt sich in Umfangsrichtung der Dichtung 10 und ist dazu eingerichtet, mit einem Hinterschnitt 20 (vgl. FIG. 4a und FIG. 4b) der Dichtungsnut 12 in Eingriff zu kommen. Diese Konfiguration ermöglicht eine sichere Befestigung der Dichtung 10 in der Nut 12 und verhindert ein unbeabsichtigtes Lösen während des Betriebs der Nahrungsmittelmaschine 1.

In FIG. 6b ist die Verdrehsicherung 18 gemäß FIG. 5a und FIG. 5b isoliert dargestellt. Auch hier ist die Verdrehsicherung 18 mit der Ausbuchtung 22 zu sehen, die zum Eingreifen in einen schrägen Einführabschnitt 21 der Dichtungsnut (vgl. FIG. 5b) eingerichtet ist.

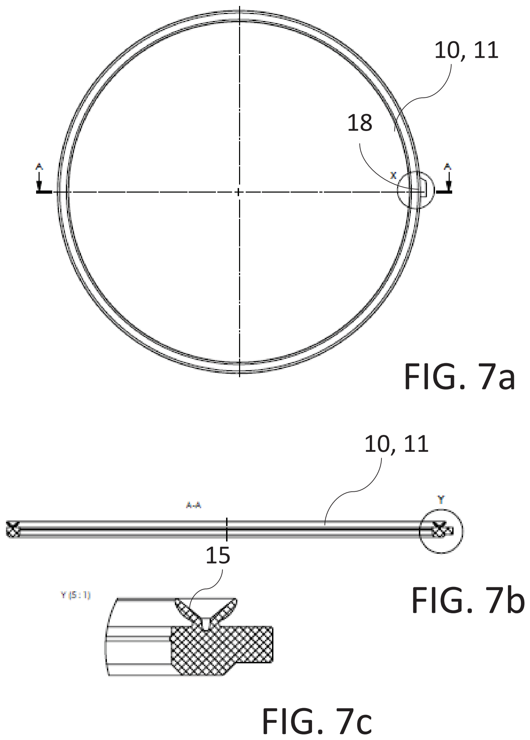

FIG. 7a veranschaulicht eine Draufsicht auf die als Axialdichtung 11 ausgebildete Dichtung 10, die in einer im Wesentlichen kreisförmigen Dichtungsnut (nicht dargestellt) angeordnet ist. Die Dichtung 10 weist eine Verdrehsicherung 18 auf, die sich in radialer Richtung R nach außen erstreckt. Diese Verdrehsicherung 18 ist so gestaltet, dass sie in eine entsprechende Vertiefung (nicht dargestellt) der Dichtungsnut eingreift. Es können dabei auch mehr als zwei Verdrehsicherungen 18 mit identischer oder variierender Ausbildung vorhanden sein.

FIG. 7b zeigt eine geschnittene Seitenansicht der Dichtung 10 entlang der Linie A-A aus FIG. 7a. Diese Ansicht verdeutlicht die axiale Ausdehnung der Dichtung 10 und zeigt die Ausbildung einer Dichtlippe 15 der Dichtung 10. Ferner ist die Erstreckung der Verdrehsicherung 18 entlang der radialen Richtung gezeigt. Die Dichtlippe 15 ist im Detail ferner in FIG. 7c gezeigt.

Die Dichtlippe 15 der Dichtung 10 weist in der gezeigten Ansicht nach oben und die Korrekte Einbaulage EL ist essentiell, damit die Dichtlippe 15 ihre Funktion entfalten kann. Dies wird durch die Verdrehsicherung 18 und die korrespondierend ausgebildete Vertiefung 14 sichergestellt.

### Bezugszeichenliste

- 1: Nahrungsmittelmaschine
- 2: Füllmaschine
- 4: stationäre Baugruppe
- 6: Förderbaugruppe
- 8: Verarbeitungsbereich
- 10: Dichtung
- 11: Axialdichtung
- 12: Dichtungsnut
- 13: konkave Form
- 14: Vertiefung
- 14.1: erste Vertiefung
- 14.2: zweite Vertiefung
- 15: Dichtungslippe
- 16: Demontagezugang
- 18: Verdrehsicherung
- 20: Hinterschnitt
- 21: schräger Einführabschnitt
- 22: Ausbuchtung
- 24: erste Projektionsfläche
- 26: zweite Projektionsfläche
- 28: Trichter
- 30: Trichtereinlauf
- 32: Zubringerkurve
- 34: Trichterflansch
- 36: Förderwerk
- 38: Pumpe
- h1: erste Höhe
- h2: zweite Höhe
- A: axiale Richtung
- F: Axialkräfte
- RA: Rotationsachse
- EL: Einbaulage
- E: Ebene
- α: Versatzwinkel
- R: radiale Richtung
- n: Flächennormale

## Patentansprüche

1. Nahrungsmittelmaschine (1), insbesondere Füllmaschine (2), umfassend:
- eine stationäre Baugruppe (4),
- eine rotierbar um eine Rotationsachse (RA) an der stationären Baugruppe (4) gelagerte dynamische Förderbaugruppe (6), die fluidleitend mit der stationären Baugruppe (4) verbunden ist und gemeinsam mit der stationären Baugruppe (4) einen sich entlang der Rotationsachse (RA) erstreckenden Verarbeitungsbereich (8) definiert, der zum Aufnehmen eines Lebensmittels eingerichtet ist, wobei die Förderbaugruppe (6) zum Fördern des Lebensmittels durch den Verarbeitungsbereich (8) eingerichtet ist,
- eine zwischen der stationären Baugruppe (4) und der Förderbaugruppe (6) gelagerte Dichtung (10), die zum Abdichten des Verarbeitungsbereichs (8) eingerichtet ist,
wobei die stationäre Baugruppe (4) eine koaxial zur Rotationsachse (RA) angeordnete im wesentlichen kreisförmige Dichtungsnut (12) aufweist und die Dichtung (10) in der Dichtungsnut (12) angeordnet ist, die Dichtungsnut (12) mindestens eine sich distal in radialer Richtung (R) erstreckende Vertiefung (14) aufweist, die dazu eingerichtet ist, einen Demontagezugang (16) zum Entfernen der Dichtung (10) aus der Dichtungsnut (12) bereitzustellen,
**dadurch gekennzeichnet, dass** die Dichtung (10) eine Axialdichtung (11) ist und mindestens eine in radialer Richtung (R) vorstehende Verdrehsicherung (18) umfasst, die dazu eingerichtet ist, die sich in die Vertiefung (14) der Dichtungsnut (12) erstreckt.

2. Nahrungsmittelmaschine (1) nach Anspruch 1,
wobei die mindestens eine Verdrehsicherung (18) asymmetrisch ausgebildet ist.

3. Nahrungsmittelmaschine (1) nach Anspruch 1 oder 2,
wobei die Dichtungsnut (12) einen Hinterschnitt (20) aufweist und die mindestens eine Verdrehsicherung (18) eine sich in Umfangsrichtung der Dichtung (10) erstreckende Ausbuchtung (22) aufweist, die dazu eingerichtet ist, mit dem Hinterschnitt (20) in Eingriff zu kommen, oder
wobei die Dichtungsnut (12) einen schrägen Einführabschnitt (21) aufweist und die mindestens eine Verdrehsicherung (18) eine sich in korrespondierend ausgebildete Ausbuchtung (22) aufweist, die dazu eingerichtet ist, mit dem schrägen Einführabschnitt (21) in Eingriff zu kommen.

4. Nahrungsmittelmaschine (1) nach einem der vorstehenden Ansprüche,
wobei die Vertiefung (14) und die mindestens eine Verdrehsicherung (18) asymmetrisch ausgebildet sind, derart, dass die mindestens eine Verdrehsicherung (18) ausschließlich in einer Einbaulage (E) von der Vertiefung (14) aufnehmbar ist.

5. Nahrungsmittelmaschine (1) nach einem der vorstehenden Ansprüche,
wobei die Dichtungsnut (12) mindestens eine erste Vertiefung (14.1) und eine zweite Vertiefung (14.2) aufweist, die um einem Versatzwinkel (α) relativ zu der ersten Vertiefung versetzt ist, wobei der Versatzwinkel (a) ungleich 180° ist.

6. Nahrungsmittelmaschine (1) nach einem der vorstehenden Ansprüche,
wobei sich die Vertiefung (14) und die mindestens eine Verdrehsicherung (18) sich in radialer Richtung (R) nach Außen erstrecken.

7. Nahrungsmittelmaschine (1) nach einem der vorstehenden Ansprüche,
wobei in einer Ebene (E), deren Flächennormale (n) die Rotationsachse (RA) bildet, die Vertiefung (14) eine erste Projektionsfläche (24) und die mindestens eine Verdrehsicherung (18) eine zweite Projektionsfläche (26) aufweist, die kleiner als die erste Projektionsfläche (24) ist.

8. Nahrungsmittelmaschine (1) nach einem der vorstehenden Ansprüche,
wobei die Dichtung (10) und die mindestens eine Verdrehsicherung (18) integral ausgebildet sind.

9. Nahrungsmittelmaschine (1) nach einem der vorstehenden Ansprüche,
wobei die Nahrungsmittelmaschine (1) eine Füllmaschine (2) ist, die stationäre Baugruppe (4) als ein Trichtereinlauf (30) und die Förderbaugruppe (6) als eine Zubringerkurve (32), der Füllmaschine (2) ausgebildet ist.

10. Nahrungsmittelmaschine (1) nach einem der Ansprüche 1 bis 8,
wobei die Nahrungsmittelmaschine (1) eine Füllmaschine (2) ist, die stationäre Baugruppe (4) als ein Trichterflansch (34) und die Förderbaugruppe (6) als ein Förderwerk (36), insbesondere eine Pumpe (38), der Füllmaschine (2) ausgebildet ist.

11. Nahrungsmittelmaschine (1) nach einem der vorstehenden Ansprüche,
wobei die Dichtung (10) eine erste Höhe (h1) in axialer Richtung (A) und die Dichtungsnut (12) eine zweite Höhe (h2) in axialer Richtung (A) aufweist, die kleiner als die erste Höhe (h1) ist, derart, dass durch die stationäre Baugruppe (4) und die Förderbaugruppe (6) Axialkräfte auf die Dichtung (10) wirken.

12. Nahrungsmittelmaschine (1) nach einem der vorstehenden Ansprüche,
wobei die Dichtung (10) eine erste Höhe in radialer Richtung (R) und die Dichtungsnut (12) eine zweite Höhe in radialer Richtung (R) aufweist, die kleiner als die erste Höhe ist, derart, dass durch die stationäre Baugruppe (4) und die Förderbaugruppe (6) Radialkräfte auf die Dichtung (10) wirken.

13. Nahrungsmittelmaschine (1) nach einem der vorstehenden Ansprüche,
wobei die mindestens eine Vertiefung (14) eine abgerundete konkave Form (13) aufweist.

14. Dichtung (10) für eine Nahrungsmittelmaschine (1), insbesondere für eine Nahrungsmittelmaschine nach einem der vorstehenden Ansprüche,
wobei die Dichtung (10) im Wesentlichen kreisförmig ausgebildet und einen Dichtwerkstoff aufweist, derart, dass die Dichtung (10) dazu eingerichtet ist, in einer im wesentlichen kreisförmige Dichtungsnut (12) zwischen einer stationären Baugruppe (4) und einer rotierbar gelagerten Förderbaugruppe (6) aufgenommen zu werden und, einen Verarbeitungsbereich (8) abzudichten,
**dadurch gekennzeichnet, dass** die Dichtung (10) eine Axialdichtung (11) ist und mindestens eine in radialer Richtung (R) vorstehende Verdrehsicherung (18) umfasst, die dazu eingerichtet ist, sich in eine korrespondierende Vertiefung (14) der Dichtungsnut (12) in der Nahrungsmittelmaschine (1) zu erstrecken.

15. Verwendung einer Dichtung (10) nach Anspruch 14 zum Abdichten des Verarbeitungsbereichs (8) einer Nahrungsmittelmaschine (1) nach einem der Ansprüche 1 bis 13.
